# EUROPEAN PATENT APPLICATION

(11) **EP 3 569 796 A1**
(43) Date of publication of application: **20.11.2019**
(21) Application number: 18172322.2
(22) Date of filing: 15.05.2018
(51) Int. Cl.: E04H 12/12, E04H 12/16, E04H 12/20, E04H 12/34, F03D 13/20

(54) **TOWER ASSEMBLY FOR A WIND TURBINE INSTALLATION AND METHOD OF ITS MANUFACTURING**

(71) Applicant: youWINenergy GmbH, 27568 Bremerhaven (DE)
(72) Inventor: Rohden, Rolf, 26607 Aurich (DE)
(74) Representative: Bird & Bird LLP

(57) **Abstract**

Tower assembly for a wind turbine installation, the tower assembly comprising a concrete tubular first tower segment, having a first channel aligned with a longitudinal axis of the first tower segment for a pre-stressing cable, a concrete tubular second tower segment, having a second channel aligned with a longitudinal axis of the second tower segment for a pre-stressing cable, wherein the first tower segment is arranged on top of the second tower segment, such that the first channel and the second channel are aligned.

## Description

### Description

The present invention relates to tower assembly for a wind turbine installation. The tower assembly may advantageously be used for new wind turbine installations as well as for refurbishing existing wind turbine installations.

The European Patent Application published under EP 2 846 040 A1 discloses a wind turbine installation comprising a tower assembly and a wind turbine assembly on top of and supported by the tower assembly. The tower assembly comprises several concrete tubular tower segments and supporting means capable of receiving bending loads imposed on the wind turbine installation by the wind driving the wind turbine assembly. The supporting means are guy wires or guy tubes each of which is connected to the outside of the tower assembly and to a foundation in the ground at a predetermined distance from the wind turbine installation.

### Problem and solution

The cost of the tower assembly contributes significantly to the overall cost of the wind turbine installation. It is an object of the present invention to reduce the cost of the wind turbine installation.

The above object is solved by a tower assembly (first aspect) according to claim 1 and, according to a second aspect, by a method of manufacturing a tower assembly. Preferred embodiments of the invention form the respective subject matter of the depending claims.

The tower assembly according to the first aspect is suitable for a wind turbine installation and comprises a concrete tubular first tower segment (abbreviated as "first tower segment") which has a first channel which is aligned with a longitudinal axis of the first tower segment and is arranged for accepting a pre-stressing cable. The tower assembly further comprises a concrete tubular second tower segment (abbreviated as "second tower segment") having a second channel which is aligned with a longitudinal axis of the second tower segment and is arranged for accepting a pre-stressing cable. The first tower segment is arranged on top of or above the second tower segment, such that the first channel and the second channel are aligned. The tower assembly also comprises supporting means, a first end of which is mechanically connected with the second tower segment, the supporting means being arranged for receiving or absorbing a load imposed on the tower assembly.

The method of manufacturing a tower assembly, preferably according to the first aspect, comprises the following steps
S1 providing a concrete tubular second tower segment, having a second channel aligned with a longitudinal axis of the second tower segment for a pre-stressing cable,
S2 positioning a concrete tubular first tower segment, having a first channel aligned with a longitudinal axis of the first tower segment for a pre-stressing cable, on top of or above the concrete tubular second tower segment, such that the first channel and the second channel are aligned,
S7 mechanically connecting a first end of supporting means with the second tower segment, the supporting means being arranged for receiving or absorbing a load imposed on the tower assembly.

The concrete tubular first tower segment can be biased towards the concrete tubular second tower segment by the pre-stressing cable which can run through the aligned first channel and second channel. Further, the pre-stressing cable can absorb a tensile load that results from a bending moment imposed on the tower assembly by the wind. This permits to reduce the cross sectional area of the concrete tubular tower segments and/or the weight of the concrete tubular tower segments. Thereby, the weight and/or the cost of the concrete tower segments and the tower assembly is reduced. Also, the need to galvanise the pre-stressing cables can be avoided by guiding pre-stressing cables in the channels of the tower segments.

Within the concept of the present invention, a concrete tubular tower segment extends along a longitudinal axis. A tower segment wall delimits a cavity or hollow inside the concrete tubular tower segment. The tower segment wall can have a circular cross section. The tower segment wall can be thick enough to encase at least one channel aligned with the longitudinal axis. Preferably, three or more such channels for pre-stressing cables are distributed along a perimeter of the concrete tubular tower segment and inside its wall. Thus, the first tower segment can have two or more first channels and the second tower segment can have two or more second channels and each of the first channels can be aligned with one of the second channels. Preferably, the outside diameter of the concrete tubular tower segment is uniform along a longitudinal axis of the tower segment. In the following, "tower segment" is used as a synonym for the expression "concrete tubular tower segment". The tower assembly has a least two such tower segments and may have additional tower segments, particularly arranged under the second tower segment.

Within the concept of the present invention, a pre-stressing cable is a cable serving to urge or bias the first tower segment towards or against the second tower segment. The pre-stressing cable can be run through the first channel and/or the second channel. The pre-stressing cables can be made with steel, carbon fibres or rovings. The pre-stressing cable can be clamped at an end of the first channel and/or of the second channel. The pre-stressing cable may absorb a tensile load resulting from a bending moment which is imposed on the tower assembly by the wind driving a wind turbine assembly on top of and supported by the tower assembly. The tower assembly can have two or more pre-stressing cables which can be fed through separate first and second channels.

### Preferred embodiments

Preferably, the second tower segment has an anchoring point arranged for mechanically connecting with a first end of the supporting means. The anchoring point can be arranged on the outer surface of the second tower segment, preferably at its lower end when the second tower segment forms a part of the tower assembly. This may simplify connecting the supporting means with the second tower segment.

According to a preferred embodiment, the tower assembly comprises a first pre-stressing cable which runs through the first channel and/or the second channel for biasing the first tower segment towards the second tower segment. The need to galvanise or protect the pre-stressing cables against the atmosphere can be avoided by guiding pre-stressing cables in channels. When the pre-stressing cable is tensioned, the first tower segment is biased towards the second tower segment. This may help to reduce the bending load on the first and second tower segment, advantageously. Preferably, the pre-stressing cable comprises steel which is tempered and/or hardened. The pre-stressing cables can be made with steel, carbon fibres or rovings. The first and/or the second tower segment can have three or more channels for separate pre-stressing cables. The tower assembly can have as many pre-stressing cables as first channels. The first and second channels can be spaced along a perimeter of the respective tower segment. A pre-stressing cable can be run through each of the first channels and the aligned second channels. This embodiment may offer the advantage of reducing a bending load on the first and second tower segment. Also, the tower assembly's stability may depend less on the wind directions.

In another preferred embodiment, the first channel is arranged in a segment wall of the first tower segment and/or the second channel is arranged in a segment wall of the second tower segment. This may help to protect the pre-stressing cable against the environment or from corrosion. Further, running the pre-stressing cable through the aligned first and second channel may be simplified.

The first and second tower segments of a further preferred embodiment have the same outer diameter. The inner diameters of the first and second tower segments can be the same. This design may help to reduce the cost of manufacturing the tower segments and/or the cost of transporting the tower segments to the site of the future tower assembly and/or the cost of transporting manufacturing moulds and equipments for segments to the installation site.

According to another preferred embodiment, an outer wall of the first tower segment and/or the second tower segment comprises a first axis of symmetry and a shorter perpendicular second axis of symmetry at a first cross section of the tower segment, and the outer wall has a curved circumference at the first cross section. This form of the tower segment, when the first axis of symmetry is at least roughly aligned with the main wind direction at the site of the tower assembly, may help to save concrete and/or cost of manufacturing. Further, the tower assembly may stand a higher wind velocity along the first axis of symmetry.

In another preferred embodiment, a second cross section at the top end of the tower assembly or at the top end of the first tower segment for connecting with a wind turbine assembly, or its nacelle, of the same wind turbine installation is circular. This may simplify mounting the wind turbine assembly and/or its operation with changing wind directions.

Preferably, the outer diameter of the first tower segment or of a top tower segment arranged on top of the first tower segment increases towards its top when the segment is mounted in the tower assembly. The first tower segment or the top tower segment can have a conical shape, at least a section of it. The ratio of the outer diameter at the top of the first tower segment divided by the outer diameter at the bottom of the first tower segment can be 1.3 to 1.8. The ratio of the outer diameter at the top of the top tower segment divided by the outer diameter at the bottom of the top tower segment can be 1.3 to 1.8. The outer diameter at the top of the first tower segment or at the top of the top tower segment can match the bottom diameter of a nacelle of a superordinate wind turbine installation or can match an outer diameter of a yaw bearing bolting pitch circle. The holes in the top of first tower segment or in the top of the top tower segment can match with bolting pitch circle. This first tower segment may be even more suitable for supporting a nacelle of the superordinate wind turbine installation. This design of the first tower segment can reduce the weight, cost and sail area of the tower assembly and/or cost of transportation to the installation site. Further, this shape may allow a greater clearance between the tower assembly and a blade tip during operation of the wind turbine installation or may allow to set the rotor closer to the tower assembly. Also, longer rotor blades can be used with this tower assembly.

An inner wall of the first tower segment and/or the second tower segment of another preferred embodiment is oval or elliptic at a first cross section of the respective tower segment. This form of the tower segment, when the longer axis of the oval or ellipse is at least roughly aligned with the main wind direction at the site of the tower assembly, may help to save concrete and/or cost of manufacturing and/or can render the tower assembly to withstand higher wind velocities. Alternatively, an outer wall of the first tower segment and/or the second tower segment is cylindrical and the inner wall is oval or elliptic at a first cross section of the respective tower segment. When the shorter axis of the oval or elliptic cross section is at least roughly aligned with the main wind direction at the site of the tower assembly, concrete and/or cost of manufacturing can be saved and/or can render the tower assembly to withstand higher wind velocities.

According to another preferred embodiment, the average wall thickness of the first tower segment is smaller than the average wall thickness of the second tower segment. This may help to save concrete and/or cost of manufacturing.

Another preferred embodiment has one or more first transition segments for connecting with one of the tower segments of the tower assembly, particularly with the second tower segment. The first transition segment can be hollow, can be made with steel and/or can be ring shaped. The first transition segment is adapted to be suitably connected to two adjacent concrete tower segments. Such a connection is not only beneficial for a reliable connection between two concrete tower segments, but also from the viewpoint of an easy to achieve and cost-efficient connection between the various concrete tower segments. This first transition segment may help to render the tower assembly more durable, particularly by averaging mechanical stresses on a tower segment. Further, the effort of mounting the tower assembly at its site may be reduced. By using a first transition segment for connecting two concrete tower segments, it is possible to provide a reliable and simple connection.

The first transition segment may comprise a flange for accommodating an axial end of one of the tower segments. By using a U-shaped flange for accommodating an axial end of the upper one of two adjacent concrete tower segments, the mountability of the upper one of two adjacent concrete tower segments can be enhanced because the upper one of the two adjacent concrete tower segments simply has to be inserted in the U-shaped flange. Accordingly, the U-shaped flange also serves as a mounting guide. Said one or more first transition segments may comprise L-shaped flange connectible to the lower one of the two adjacent concrete tower segments. The L-shaped flange is preferably constructed in such a manner that that one leg of the L-shape protrudes in a downward direction when the first transition segment is mounted on a concrete tower segment. Preferably, the free end of the protruding leg of the L-shaped flange is in contact with the lower one of the two adjacent concrete tower segments. Accordingly, it is possible to provide a step-wise increase of the inner diameter from one concrete tower segment to the other.

The first transition segment can accommodate the lower axial end of the second tower segment, when the first tower segment is arranged above the second tower segment. An end of the first pre-stressing cable can be held by the first transition segment. When the first transition segment is mechanically connected with the lower axial end of the second tower segment, it can be considered to form a part of the second tower segment. The second tower segment and the first transition segment can be manufactured, e.g. in a workshop, to form a single body. This may simplify mounting the tower assembly at the installation site.

When the first transition segment is mechanically connected with the second tower segment or when the second tower segment and the first transition segment form a single body, then the first end of the supporting means can be mechanically connected with the first transition segment. These preferred embodiments fall under the first aspect and may offer the advantage of an increased durability of the tower assembly.

In another preferred embodiment, the first transition segment is arranged between the first tower segment and the second tower segment, wherein the first tower segment is biased towards the second tower segment. The first transition segment can serve to average mechanical stresses on the tower segments and/or to simplify connecting two immediately adjacent tower segments.

According to another preferred embodiment, the first pre-stressing cable, preferably an end of the first pre-stressing cable, can be held or supported by the first transition segment. The first transition segment can have one or more openings through which the pre-stressing cable can be run. This embodiment can offer the advantage of simplified mounting of the tower assembly. Further, the first tower segment when mounted with the first transition segment and with the pre-stressing cable becomes more stable for the next step of manufacturing the tower assembly.

Another preferred embodiment comprises a metal first bearing plate for supporting the first pre-stressing cable, particularly in an opening of the first bearing plate. The first bearing plate is supported by the first tower segment or the second tower segment. The first bearing plate can rest on an axial end face of one of the tower segments. Preferably, one of the first bearing plates rests on the top axial end face of the first tower segment and holds one or more first pre-stressing cables. The first bearing plate can have a through-hole through which the first pre-stressing cable can be run. The first bearing plate may be ring shaped and may have several through-holes spaced along a perimeter of the first bearing plate for aligning with the first channels and/or the second channels. The through hole may extend conically along a longitudinal axis of the first bearing plate. A clamping device, the exterior of which can be essentially conical and which can have a slit, can be used to clamp the first pre-stressing cable in the through-hole.

Alternatively, the clamping device can have several wedge-shaped elements. This embodiment can offer the advantage of simplified mounting of the tower assembly and/or simplified tensioning of the first pre-stressing cable. An axial end face of the first bearing plate can have a ridge or a groove extending along a perimeter of the axial end face. Alternatively, the axial end face of the first bearing plate can have one or more protrusions and/or recesses. These geometries may simplify the positioning of the first bearing plate relative to one of the tower segments. The first bearing plate can serve to average mechanical stresses on the tower segments.

A further preferred embodiment comprises one or more, preferably three, supporting means, a first end of each of which is connected with one of the tower segments or with one of the first transition segments for receiving a load imposed on the tower assembly. In this respect, supporting means is to be understood as a means able to receive bending loads and/or to apply a counterforce acting against the bending loads. A longitudinal axis of the supporting means may intersect the longitudinal axis of one of the tower segments. There may be three or more supporting means, which are spaced, preferably evenly, about one of the tower segments or one of the first transition segments to compensate for different wind directions. A first end of the supporting means may be connected to an outer surface of the tower assembly, the second tower segment or to one of its first transition segments. An opposite end of the supporting means can be connected with a second foundation spaced from the main foundation of the tower assembly. This embodiment may serve to better absorb some of the forces imposed by the wind driving a wind turbine assembly supported by the tower assembly. Accordingly, it is possible to reduce bending loads acting on the concrete tower portion of the tower assembly. The stability and rigidity of the concrete tower portion can be enhanced. As the bending loads are transferred from the tower through the supporting means to the ground.

As the bending moments along the longitudinal direction towards the tower base can be reduced by the supporting means, the average wall thickness of a concrete tower segment of said two or more concrete tower segments can be smaller than the average wall thickness of an adjacent upper concrete tower segment. The lower portions of the concrete tower portions can be less susceptible to such bending loads.

Preferably, the supporting means comprise a steel tube section or at least one steel cable or a steel rod. If the supporting means has a number of steel cables arranged in parallel, preferably having the same tension, then the handling of each of the steel cables is simplified.

Preferred supporting means are panel shaped (supporting panel) and the supporting panels can be made from concrete. The supporting panel can be a prism with two parallel triangular surfaces and three vertices. The supporting panels can be connected to an outer surface of the tower assembly. The first vertex can be connected with the first transition segment, the second vertex with a second foundation and a third vertex can be connected with the main foundation. A pre-stressing cable can run through a channel of the concrete supporting panel for pre-stressing the supporting panel and/or for absorbing a tensile load. The channel can be adjacent to a sloped outer surface of the supporting panel. A first end of the pre-stressing cable can be connected to an outer surface of the tower assembly or to its first transition segment. Another end of the pre-stressing cable can be connected with a second foundation. The supporting panels can have a number of cavities which can serve to reduce the weight and cost of the supporting panel and/or to reduce its sail area with respect to the wind streaming about the tower assembly. The panel shaped supporting means can reduce the volume of central concrete column. The panel shaped supporting means can provide additional strength and support to withstand bending stresses at the lower part of the tower assembly. In total, concrete, reinforcement steel and pre-stressing wires and the associated cost can be reduced.

Preferably the supporting panels are composed of polygonal concrete panel elements. The panel elements can have the shape of a prism with two parallel triangular surfaces or of a rectangular cuboid. Several such panel elements can be arranged, preferably at the installation site, to form a prism with two parallel triangular surfaces. The panel elements can be mechanically connected by fastening elements. The panel elements can have channels for pre-stressing cables preferably urging the panel elements towards each other. So, the pre-stressing cables need not be galvanised. The panel elements can have recesses to save weight and cost. The panel elements may also help reduce the cost of transport to the installation site.

In another preferred embodiment, one or more of the supporting means each comprise a hollow concrete tower link and a second pre-stressing cable. There may be two or more hollow concrete tower links spaced along a perimeter of one of the tower segments or of one of the first transition segments and as many second pre-stressing cables. These multiple hollow concrete tower links may serve to compensate for different wind directions. The hollow concrete tower link serves to absorb a bending moment imposed on the tower assembly by the wind driving a wind turbine installation supported by the tower assembly. The longitudinal axes of the hollow concrete tower link and the second pre-stressing cable are essentially aligned. The hollow concrete tower link can be designed as an essentially cylindrical prop. The second pre-stressing cable can reduce the bending load on the hollow concrete tower link, when tensioned. The second pre-stressing cable can absorb part of a tensile force imposed on the hollow concrete tower link by wind acting on the concrete segments and/or a wind turbine assembly supported by the tower assembly. The hollow concrete tower link can encase two or more second pre-stressing cables, preferably three such second pre-stressing cables the longitudinal axes of which are spaced apart from each other evenly. A wall of the hollow concrete tower link or tower link wall can have one or more channels each for guiding a second pre-stressing cable. With this embodiment, the effort of mounting the hollow concrete tower link can be reduced as thinner pre-stressing cables are easier to handle. This hollow concrete tower link may help to reduce the cost of the tower assembly, particularly as the second pre-stressing cable need not be galvanised. The ratio of the smaller diameter second pre-stressing cables compared to external large diameter wire could be 1:1.5 or even more.

Preferably, the hollow concrete tower link has two or more hollow link segments biased towards each other, preferably by the second pre-stressing cable running through the hollow link segments. Each of the hollow link segments can have two or more channels for separate second pre-stressing cables. The second pre-stressing cable can be arranged inside the hollow concrete tower link, particularly inside a channel of the hollow concrete tower links. These hollow link segments may serve to reduce the effort of mounting the tower assembly. Also, the cost of transport can be reduced with the hollow link segments, which are shorter than a one piece hollow concrete tower link.

According to another preferred embodiment, the supporting means comprise a concrete support extending essentially vertically for supporting the hollow concrete tower link. The concrete support can rest on the ground, particularly on a second foundation spaced apart from the main foundation of the tower assembly. The hollow concrete tower link can rest on the concrete support's opposite end. The concrete support can be designed as an essentially cylindrical prop. There can be two or more such concrete supports per hollow concrete tower link. The concrete support can support at least some of the weight of the hollow concrete tower link and/or can help to reduce the weight induced bending of the hollow concrete tower link.

The supporting means of another preferred embodiment comprise a metal second bearing plate for supporting the second pre-stressing cable, particularly in a through hole of the second bearing plate, or for supporting one or more steel cables which form a supporting means. The second bearing plate can be supported by the first transition segment, by the hollow concrete tower link or by a second foundation. The second bearing plate can have two or more through holes. These through holes may extend conically through the second bearing plate. A clamping device, the exterior of which can be essentially conical and which can have a slit or which can have several clamping elements, can be used to clamp one of the second pre-stressing cables in the through-hole. This embodiment can offer the advantage of simplified mounting of the tower assembly and/or simplified tensioning of the first pre-stressing cable. The second bearing plate can help to average mechanical stresses on the hollow concrete tower link. Tensioning of the second pre-stressing cable can be simplified with the second bearing plate.

In another preferred embodiment, the first transition segment comprises a projection for supporting one of the second bearing plates. The projection extends along a longitudinal axis which can align with one of the second pre-stressing cables held by the second bearing plate. The projection is essentially cylindrical and one or more second pre-stressing cables may run through a cavity of the projection. When supported or held by the projection, a surface of the second bearing plate can be perpendicular to a tensile force imposed by the supporting means on the first transition segment. The first transition segment can comprise a respective projection for each of the supporting means of the tower assembly. The projection of the first transition segment can serve to simplify the mounting of the second bearing plate.

Preferably, the second pre-stressing cable has an anchor on one end, which is arranged for being attached to the ground or a second foundation. The opposite end of the second pre-stressing cable has a means, particularly an eye, for fastening to the first transition segment.

Another preferred embodiment comprises one or more, particularly conical or wedge shaped, clamping devices, wherein the first bearing plate and/or the second bearing plate has a tapered opening, wherein at least one of the clamping devices can be inserted into the tapered opening for clamping one of the first or second pre-stressing cables running through the tapered opening. This clamping device can simplify the tensioning of the pre-stressing cable.

A further preferred embodiment has a spring element for supporting one of the first or second bearing plates and/or for tensioning one of the first or second pre-stressing cables. The spring element comprises a main body and a helical spring, a first end of which supports the main body. The main body supports one of the first or second bearing plates. The helical spring can abut against one of the first transition segments, one of its projections or one of the hollow concrete tower links. First or second pre-stressing cables can extend in a cavity of the main body. This spring element can help to absorb load spikes.

A further preferred embodiment comprises a tubular steel third tower segment arranged on top of the first tower segment. An end of the first pre stressing cable is held by the third tower segment for biasing the third tower segment towards the first tower segment. Preferably the first pre stressing cable is arranged in a third channel of the third tower segment. This steel third tower segment can simplify the mounting of the wind turbine installation.

In another preferred embodiment, a third pre-stressing cable runs from the first or second tower segment towards the bottom of the tower assembly, preferably inside the hollow of the second tower segment and/or through one of the first transition segments. The third pre-stressing cable can bias the first tower segment towards the bottom of the tower assembly. Preferably, the third pre-stressing cable runs through the hollow of the first and second tower segment and biases the first tower segment towards the bottom of the tower assembly. The third pre-stressing cable can help to simplify mounting the tower assembly, particularly if tensioned before the first pre-stressing cable.

A further preferred embodiment comprises a concrete tubular fourth tower segment, preferably having fourth channels aligned with a longitudinal axis of the fourth tower segment and arranged for accepting pre-stressing cables. Further, this embodiment comprises a concrete tubular fifth tower segment, preferably having fifth channels aligned with a longitudinal axis of the fifth tower segment and arranged for accepting pre-stressing cables, which can be the first pre-stressing cable or a fourth pre-stressing cable. The fourth tower segment is arranged above or on top of the fifth tower segment, preferably such that the fourth channel and the fifth channel are aligned. One of the fourth channels may align with one of the second channels. The second tower segment is arranged above or on top of the fourth tower segment. One of the first transition segments can accommodate axial ends of the second tower segment and of the fourth tower segment. Preferably, this embodiment comprises one or more fourth pre-stressing cables, a first end of each of which is held by one of the first transition segments. Alternatively, one of the first pre-stressing cables can run through one of the first channels and one of the fifth channels. One of the first bearing plates can abut on the bottom axial end face of the fifth tower segment and holds one or more first pre-stressing cables and/or one or more second pre-stressing cables.

Preferably, the tower assembly has the fourth tower segment positioned on the fifth tower segment. The fourth channel of the fourth tower segment is aligned with the fifth channel of the fifth tower segment. A first transition segment can be positioned on top of the fourth tower segment. A pre-stressing cable runs through the channels of the fourth and fifth tower segment and biases the fourth tower segment towards the fifth tower segment, while an end of the pre-stressing cable can be held by the first transition segment. The pre-stressing cable can be identical to the first pre-stressing cable or can be a separate fourth pre-stressing cable. In this state, the tower assembly can be more stable before positioning the second tower segment on top of the first transition segment.

In a preferred embodiment, another concrete tubular tower segment, similar to the first tower segment, is inserted between the first and second tower segment and/or between the fourth and fifth tower segment. This will help to increase the height of the tower assembly without increasing the height of the tower segments.

Preferably, a wind turbine installation comprises a tower assembly as explained before and a wind turbine assembly mounted on said tower assembly. The wind turbine assembly comprises a nacelle supporting a power generator and a rotor with blades. A hub of the rotor is coupled to the power generator. The tower assembly can help to reduce the overall cost of the wind turbine installation.

A preferred embodiment of the method of the second aspect further comprises the following steps:
S3 running the first pre-stressing cable through the first channel and the second channel,
S4 tensioning the first pre-stressing cable such that the concrete tubular first tower segment is biased towards the concrete tubular second tower segment.
This improvement has the advantage that the pre-stressing cable absorbs a tensile load that results from a bending moment imposed on the tower assembly by the wind. This permits to reduce the cross sectional area of the concrete tubular tower segments. Thereby, the weight and cost of the concrete tower segments is reduced.

Another preferred embodiment of the method has the following steps:
S5 Checking the main wind direction at the intended site of the tower assembly,
S6 Arranging the second tower segment at the intended site, such that the longer axis of symmetry of a cross section through the second tower segment is essentially aligned with the main wind direction, preferably before step S2.
In doing so, the section modulus of the tower assembly is improved with respect to the main wind direction.

Another preferred embodiment of the method has the following steps:
S10 providing a fifth tower segment having a fifth channel aligned with the longitudinal axis of the fifth tower segment and arranged for accepting a pre-stressing cable,
S11 positioning a fourth tower segment having a fourth channel aligned with the longitudinal axis of the fourth tower segment and arranged for accepting a pre-stressing cable, on the top of fifth tower segment such that channels in the firth tower segment and channels in the fourth tower segment are aligned,
S12 Positioning a first transition segment on the top of fourth tower segment,
S13 mechanically connecting one or more, preferably three, supporting means with the first transition segment.
These steps can be performed before step Si, particularly before positioning the second tower segment on the first transition segment.

Preferably, any of the above methods further comprises one or more of the following steps:
S21 adding supporting means to the tower assembly, wherein a first end of the supporting means is connected with one of the tower segments or with a first transition segment of the tower assembly for receiving a load imposed on the tower assembly particularly by the wind streaming about the tower segments, and/or
S22 adding several supporting means to the tower assembly, such that more supporting means can absorb a load or force aligned with the predominant wind direction.

### Preferred designs of the tower assembly

In the following, preferred designs of the tower assembly are explained. These preferred designs can be combined with each of the above preferred embodiments.

A preferred design "A" of the tower assembly comprises a first tower segment, a second tower segment and a first transition segment, which accommodates the lower axial end of the second tower segment. Essentially, the first transition segment can be considered to form a part of the second tower segment. The first tower segment is arranged on top of the second tower segment. Each of the first and second tower segments has three or more first, respectively second channels. These channels are spaced apart along a perimeter of the tower segments and are encased by the wall of the respective tower segment. Separate first pre-stressing cables are run through these first and second channels. An end of each of the first pre-stressing cables is held by the first transition segment. The first pre-stressing cables bias the first tower segment towards the second tower segment. Three or more supporting means are made with steel cables and are connected with the first transition segment and with second foundations spaced apart from the tower assembly's main foundation. Further concrete tubular tower segments are arranged one above the other. These support the first transition segment. Between two of the further tower segments there is another first transition segment. This other first transition segment is also wired with further supporting means which are made with steel cables. These further supporting means can be connected with the same second foundations.

Alternatively, the tower assembly lacks a first transition segment. Ends of the first pre-stressing cables, first ends of the supporting means are held by the second tower segment.

A preferred design "B" of the tower assembly comprises a first tower segment, a second tower segment and a first transition segment, which accommodates the lower axial end of the second tower segment. The first tower segment is arranged on top of the second tower segment. Each of the first and second tower segments has three or more first, respectively second channels. These channels are spaced apart along a perimeter of the tower segments and are encased by the wall of the respective tower segment. Separate first pre-stressing cables are run through these first and second channels. An end of each of the first pre-stressing cables is held by the first transition segment, which can be considered to form a part of the second tower segment. The first pre-stressing cables bias the first tower segment towards the second tower segment. Three or more supporting means are made with steel cables and are connected with the first transition segment and with second foundations spaced apart from the tower assembly's main foundation. The tower assembly has a fourth tower segment, another first transition segment, a fifth tower segment and several fourth pre-stressing cables biasing the fifth tower segment towards the fourth tower segment and towards the first transition segment. Ends of the fourth pre-stressing cables are held by the first transition segment arranged between the second and the fourth tower segment. The additional first transition segment is arranged between the fourth and the fifth tower segment. Further supporting means made with steel cables are connected with the additional first transition segment and with the same second foundations, respectively.

Alternatively, the tower assembly lacks a first transition segment. Ends of the first pre-stressing cables, ends of the fourth pre-stressing cables and first ends of the supporting means are held by the second tower segment.

A preferred design "C" of the tower assembly is based on design "B" and further comprises an third pre-stressing cable which runs from the first or second tower segment towards the bottom of the tower assembly and inside the hollow of the second tower segment and through the first transition segment. The third pre-stressing cable can bias the first or second tower segment towards the bottom of the tower assembly. An end of the third pre-stressing cable can be connected with the fourth or fifth tower segment.

A preferred design "D" of the tower assembly comprises a first tower segment, a second tower segment and a first transition segment, which accommodates the lower axial end of the second tower segment. The first tower segment is arranged on top of the second tower segment. Each of the first and second tower segments has three or more first, respectively second channels. These channels are spaced apart along a perimeter of the tower segments and are encased by the wall of the respective tower segment. Separate first pre-stressing cables are run through these first and second channels. An end of some of the first pre-stressing cables is held by the first transition segment, which can be considered to form a part of the second tower segment. The first pre-stressing cables bias the first tower segment towards the second tower segment. Three or more supporting means are connected with the first transition segment and with second foundations spaced apart from the tower assembly's main foundation. The tower assembly has a fourth tower segment, another first transition segment, a fifth tower segment and several fourth pre-stressing cables biasing the fifth tower segment towards the fourth tower segment and towards the first transition segment. Ends of the fourth pre-stressing cables are held by the first transition segment arranged between the second and the fourth tower segment. Some of the first pre-stressing cables extend through the first channel, the second channel, the fourth and the fifth channel and urge the first tower segment towards the fifth tower segment. Further, a first internal pre-stressing cable runs through the hollow of the second tower segment and the first transition segment and biases the second tower segment towards the bottom of the tower assembly. Also, another first internal pre-stressing cable runs through the hollow of the fourth tower segment and the first transition segment and biases the fourth tower segment towards the top of the tower assembly.

A preferred design "E" of the tower assembly comprises a first tower segment, a second tower segment and a first transition segment, which accommodates the lower axial end of the second tower segment. The first tower segment is arranged on top of the second tower segment. Each of the first and second tower segments has three or more first, respectively second channels. The first and second channels are aligned. These channels are spaced apart along a perimeter of the tower segments and are encased by the wall of the respective tower segment. Separate first pre-stressing cables are run through the first and second channels. An end of some of the first pre-stressing cables is held by the first transition segment, which can be considered to form a part of the second tower segment. The first pre-stressing cables bias the first tower segment towards the second tower segment. Three or more supporting means are each designed with a hollow concrete tower link and with a second pre-stressing cable run inside the hollow concrete tower link. The first transition segment has several projections, one for each of the hollow concrete tower links. The projection supports a second bearing plate which holds an end of the second pre-stressing cable. The opposite end of the second pre-stressing cable is connected to a second foundation spaced apart from the main foundation. The second foundation may support another second bearing plate holding an end of the second pre-stressing cable. One or more concrete supports are provided and positioned to support one of the hollow concrete tower links. At least one of the hollow concrete tower links can have two or more hollow link segments extending along and encasing one or more, preferably three, second pre-stressing cables.

A preferred design "F" of the tower assembly comprises a first tower segment, a second tower segment and a first transition segment, which accommodates the lower axial end of the second tower segment. The first tower segment is arranged on top of the second tower segment. Each of the first and second tower segments has three or more first, respectively second channels. The first and second channels are aligned. These channels are spaced apart along a perimeter of the tower segments and are encased by the wall of the respective tower segment. Separate first pre-stressing cables are run through the first and second channels. An end of some of the first pre-stressing cables is held by the first transition segment, which can be considered to form a part of the second tower segment. The first pre-stressing cables bias the first tower segment towards the second tower segment. The first transition segment has several projections, one for connecting with one of the supporting means. The projection supports a bearing plate for holding an end of a supporting means made with a steel cable. The second end of at least one of the supporting means is held by another bearing plate of a second foundation spaced apart from the main foundation of the tower assembly.

Three or more supporting means of design "F" may each comprise a number of steel cables which are arranged in three or more groups. The projection supports several third bearing plates, one for each of the groups of steel cables. There is a second foundation for each of the supporting means. Each of these second foundations supports a number of third bearing plates. This preferred design, comprising groups of steel cables, each of which is thinner than a single steel cable, may allow easier handling of the steel cables while mounting the tower assembly.

A preferred design "G" of the tower assembly comprises an additional tower segment, preferably arranged above or on top of the first tower segment. The outer diameter of the additional tower segment increases towards the top of the tower assembly while the wall thickness of the additional tower segment may be uniform. The additional tower segment can have a conical shape, at least a section of it. The ratio of the outer diameter at the top of the additional tower segment divided by the outer diameter of the first tower segment or divided by the outer diameter at the bottom of the additional tower segment can be 1.3 to 1.8. This additional tower segment can have channels aligned with the first channels and similar to the first channels through which first pre-stressing cables can be run. The first pre-stressing cables can bias the additional tower segment towards the first tower segment. The increased outer diameter of the additional tower segments at its top may be even more suitable for supporting a nacelle of the superordinate wind turbine installation. The tower assembly can comprise three panel shaped supporting means, as explained before.

### Exemplary embodiments

The figures show exemplary embodiments of the tower assembly according to the first aspect of the invention.

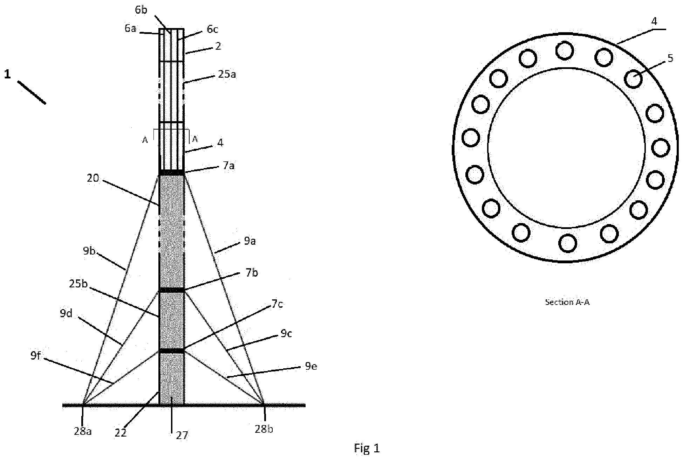

Figure 1 shows a first exemplary embodiment of the tower assembly 1 (on the left). The tower assembly comprises a concrete tubular first tower segment 2, the concrete tubular second tower segment 4, the first transition segment 7a, another concrete tubular tower segment 25a arranged between the first tower segment and the second tower segment. There may be several concrete tubular tower segments between the first tower segment and the second tower segment. The first pre-stressing cables 6a, 6b, 6c bias the first tower segment towards the second tower segment. An end of each of the first pre-stressing cables is held by the first transition segment, which can be considered to form a part of the second tower segment. The opposite ends can be held by a first bearing plate resting on the top axial end of the first tower segment. The tower segments have channels for the first pre-stressing cables and these channels are encased in the respective tower segment wall. The first pre-stressing cables run through the channels of the tower segments. Several supporting means, here designed with steel cables, are connected with the first transition segment but only two 9a, 9b of these supporting means are shown. The cables could be made with steel, carbon fibres or high strength carbon. The opposite ends of the supporting means are connected with respective second foundations 28a, 28b spaced apart from the tower assembly's main foundation 27.

The tower assembly further comprises a fourth tower segment 20, a fifth tower segment 22, two further first transition segments 7b, 7c and another concrete tubular tower segment 25b arranged between the fourth and fifth tower segment. There may be several concrete tubular tower segments 25 between the fourth tower segment and the fifth tower segment. The fourth tower segment supports the first transition segment 7a. Further supporting means 9c, 9d, 9e, 9f are connected with the two further first transition segments 7b, 7c and with the second foundations 28a, 28b.

A section A-A through the second tower segment 4 is shown on the right hand side of Fig. 1. The tower segment wall encases a number of second channels 5 which are spaced along a perimeter of the tower segment. The second tower segment has a cylindrical shape.

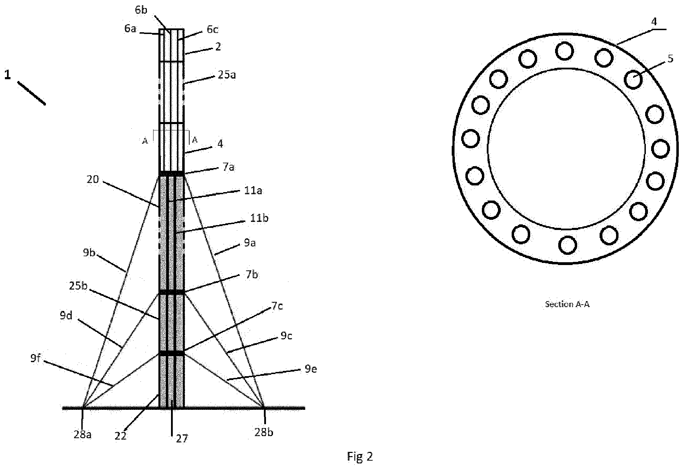

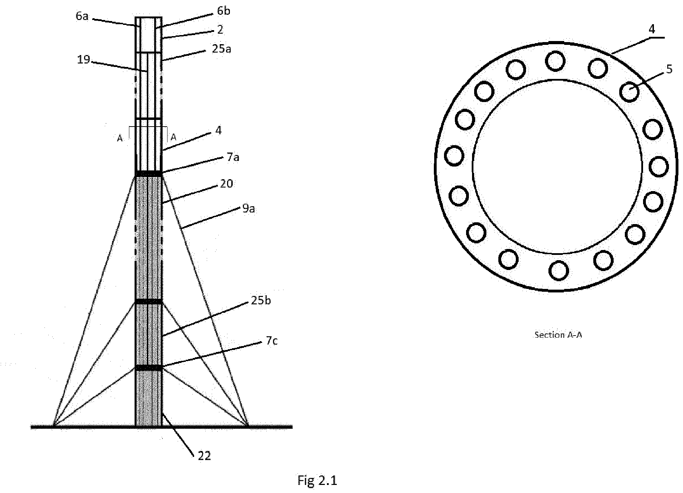

Figure 2 shows a second exemplary embodiment of the tower assembly 1. Items of the tower assembly similar to those of the first exemplary embodiment bear the same reference number. The fourth channels of the fourth tower segment 20 and the fifth channels of the fifth tower segment 22 are aligned.

Second pre-stressing cables 11a, 11b run through these channel and bias the fifth tower segment towards the fourth tower segment and towards the first transition segment 7a. Ends of the second pre-stressing cables 11a, 11b are held by the first transition segment, which can be considered to form a part of the second tower segment. Opposite ends of the second pre-stressing cables can be held by a first bearing plate abutting against the lower axial end of the fifth tower segment.

Alternatively (not shown), the first pre-stressing cables can extend through the fourth and fifth channels. Ends of the first pre-stressing cables can be held by a first bearing plate abutting against the lower axial end of the fifth tower segment.

Figure 2.1 shows a third further exemplary embodiment of the tower assembly. Items of the tower assembly similar to those of the first or second exemplary embodiment have the same reference number. A third pre-stressing cable 19 extends between the first tower segment 2 and one of the first transition segments 7c through the respective cavities of the second tower segment 4, the fourth tower segment 20 and further tower segments 25a, 25b. The third pre-stressing cable urges the second tower segment 4 towards the fourth tower segment 20. Ends of the third pre-stressing cable can be held by the first transition segment 7c and a first bearing plate (not shown) arranged under the first tower segment 2. The third pre-stressing cable need not be held by the first transition segment 7a but can run through its cavity freely.

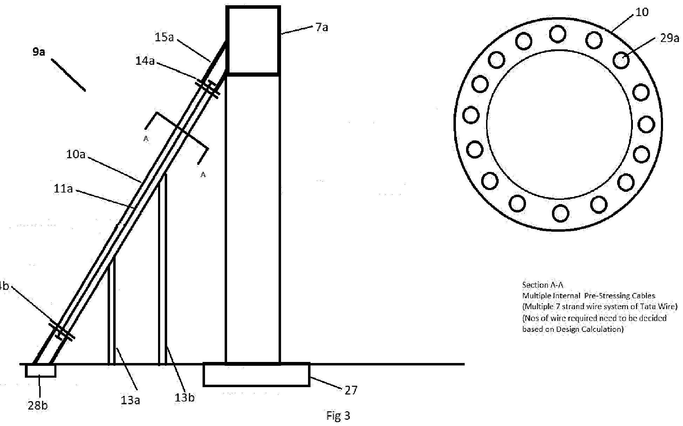

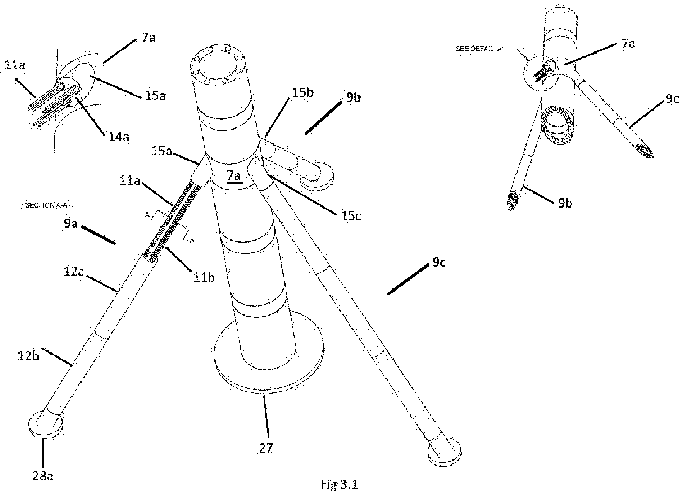

Figure 3 shows an exemplary embodiment of the first transition segment 7a and of one of the supporting means 9a. The first transition segment comprises several projections 15a (only one shown), each supporting a second bearing plate 14a to hold ends of the second pre-stressing cables of the supporting means. The shown supporting means 9a comprises a hollow concrete tower link 10a and several second pre-stressing cables 11a (only one shown).

The second pre-stressing cables are run through channels 29a in the tower link wall. These channels 29a of the hollow concrete tower link 10 are shown on the right hand side of Fig. 3. Alternatively, the second pre-stressing cables can be arranged inside a central cavity of the hollow concrete tower link.

The hollow concrete tower link 10a is supported by two concrete supports 13a, 13b extending essentially vertically. They are spaced apart between the main foundation 27 and the second foundation 28b. Also, the second foundation can support a second bearing plate 14b for holding ends of the second pre-stressing cables.

Figure 3.1 shows another exemplary embodiment of the first transition segment 7a and of supporting means 9a, 9b, 9c. Essentially, the first transition segment can be considered to form a part of the second tower segment. Items of this exemplary embodiment similar to those of the exemplary embodiment shown in Fig. 3 have the same reference number. The first transition segment has three projections 15a, 15b, 15c. The supporting means 9a, 9b, 9c have several hollow link segments 12a, 12b (only two shown) with channels for pre-stressing cables. The channels are spaced from each other. Second pre-stressing cables 11a, 11b extend through these channels between a second bearing plate 14a held by projection 15a and a second foundation 28a. The second pre-stressing cables 11a, 11b bias hollow link segments 12a, 12b against each other and may absorb some of a tensile force imposed on the tower assembly by wind. If the supporting means is put under a compressive force, depending on the wind direction, the hollow link segments will absorb some of the compressive force. Further, the tensioned second pre-stressing cables can help to reduce weight induced bending of the supporting means.

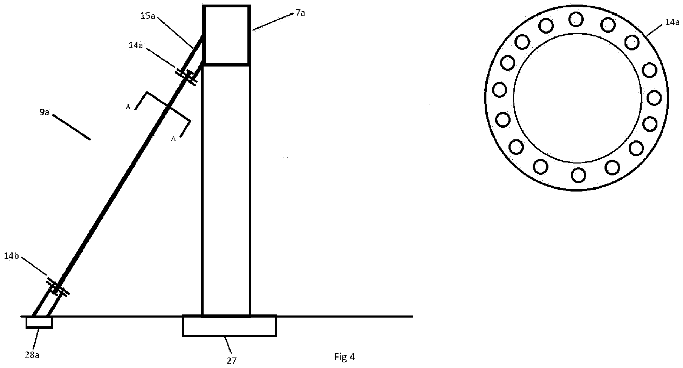

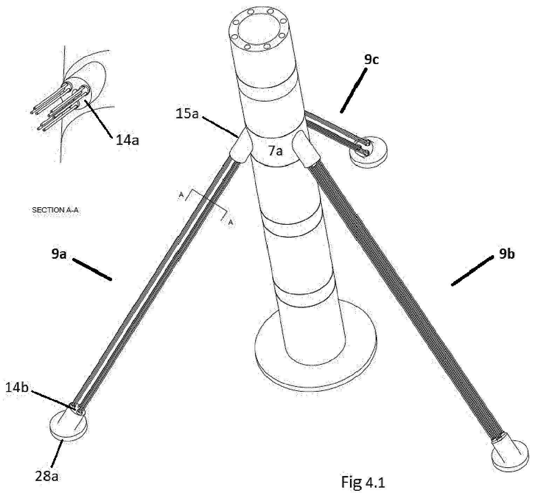

Figure 4 shows a further exemplary embodiment of the first transition segment 7a and of supporting means 9a. The first transition segment has several projections 15a (only one shown), each supporting a second bearing plate 14a. The supporting means is formed by multiple steel cables, which can absorb a tensile force imposed on the supporting means by the wind. A second foundation also supports a second bearing plate 14b. Ends of the steel cables 9a are held by the second bearing plates 14a, 14b. The second bearing plates 14a, 14b have a through hole for each of the steel cables and these through holes are spaced along a perimeter of each of the second bearing plates 14a, 14b. The steel cables may be held with the help of clamping devices (not shown) which can also be inserted into the through hole. Handling one of several steel cables, instead of a thicker single steel cable, requires less effort.

Figure 4.1 shows an alternative to the exemplary embodiment of Fig. 4. Here, the multiple steel cables of the supporting means 9a, 9b, 9c are arranged in three or more groups arranged in parallel. The second bearing plates 14a, 14b have respective groups of through holes to hold the grouped steel cables.

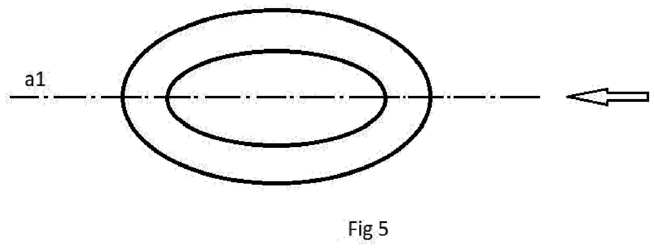

Figure 5 shows a cross section through an exemplary tower segment, preferably the lowermost or second tower segment of an exemplary tower assembly. Both, the inner wall and the outer wall of the lowermost or second tower segment are elliptical. The arrow pointing to the left indicates the main wind direction. The section modulus of the tower segment is improved with respect to the main wind direction as the longer axis of symmetry a1 is aligned with the main wind direction.

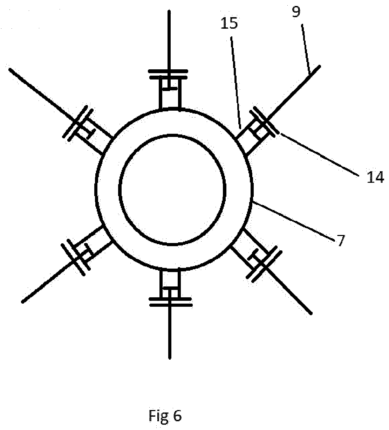

Figure 6 shows a first transition segment 7 with six projections 15 spaced along a perimeter of the first transition segment. Each of the projections supports a second bearing plate 14. Each of the second bearing plates holds an end of a respective supporting means 9. This design can help to improve the tower assembly's independence of the wind direction.

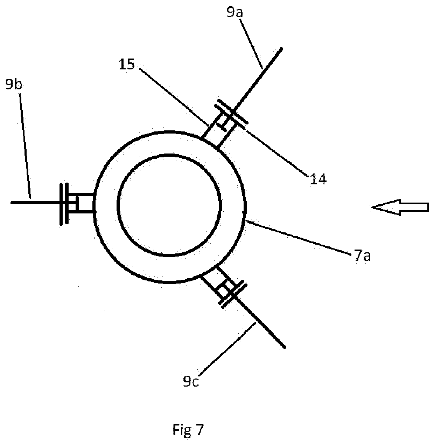

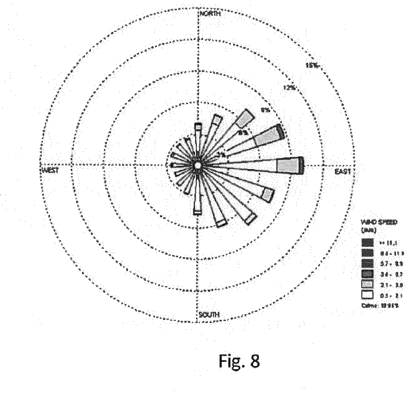

Figure 7 shows a first transition segment 7 with just three projections 15. If the supporting means 9b is aligned with the main wind direction indicated by an arrow pointing to the left, the number of supporting means can be reduced. Figure 8 shows the result of step S5 graphically.

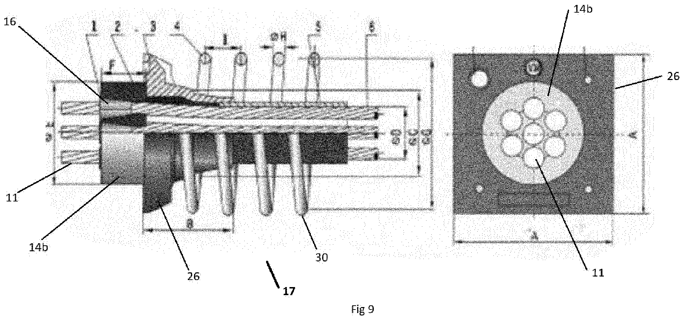

Figure 9 shows an exemplary spring element 17 for supporting a second bearing plate 14b. The spring element comprises a hollow main body 26 through which steel cables are run. Clamping devices 16 secure the steel cables in conical through holes of the second bearing plate. The main body has a prismatic section which can help to secure the spring element. The right end of the helical spring 30 can abut against one of the first transition segments, one of its projections or against a second foundation. The second bearing plate holds a number of second pre-stressing cables 11. Alternatively, the second bearing plate can hold ends of multiple steel cables of a supporting means. This spring element can help to absorb load spikes.

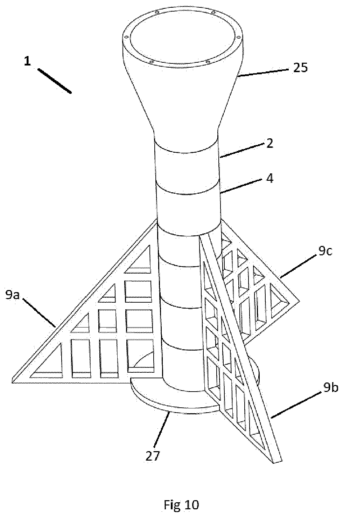

Figure 10 schematically shows another exemplary embodiment of the tower assembly 1. The tower assembly comprises a first tower segment 2 and a second tower segment 4 which are biased towards each other by first pre-stressing cables (concealed) running through aligned first and second channels (concealed) of the tower segments. An additional tower segment 25 is arranged on top of the first tower segment. The outer diameter of the additional tower segment increases towards its top to better support a nacelle (not shown). The first pre-stressing cables also running through channels of the additional tower segment bias it towards the first tower segment. The tower assembly has three supporting means 9a, 9b, 9c which are panel shaped (supporting panels) and have cavities to reduce weight, cost and sail area with respect to the wind streaming about the tower assembly. The first vertex of a supporting panel can be connected with a first transition segment below the second tower segment, the second vertex with a second foundation and a third vertex can be connected with the main foundation 27. A pre-stressing cable (concealed) runs through a channel (concealed) adjacent to the sloped outer surface of each of the supporting panels 9a, 9b, 9c. So, the pre-stressing cable need not be galvanised. First ends of the pre-stressing cables are connected with an outer surface of one of the tower segments or can be connected with a first transition segment (not shown). Opposite ends of the pre-stressing cables are connected to second foundations (not shown). The pre-stressing cables can also absorb a tensile force imposed by the wind. The supporting panels are connected to an outer surface of at least one of the tower segments. Lower outer surfaces of the supporting panels abut on the ground or on second foundations.

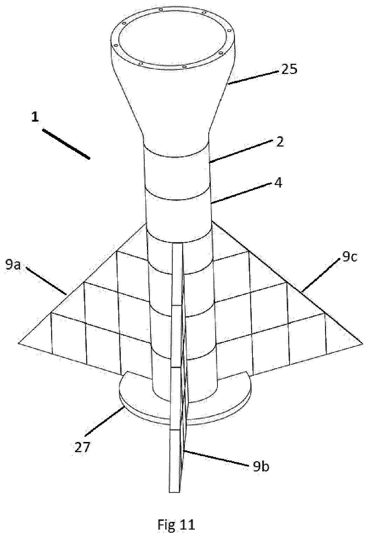

Figure 11 schematically shows a variation of the tower assembly of fig. 10. The supporting panels are formed with polygonal concrete panel elements. Some panel elements have the shape of a prism with two parallel triangular surfaces and other panel elements are rectangular cuboids. The panel elements are arranged or stacked to form a prism with two parallel triangular surfaces. The panel elements can have channels for pre-stressing cables urging the panel elements towards each other. This may also reduce the cost of transport to the installation site. A pre-stressing cable (concealed) runs through a channel (concealed) adjacent to the sloped outer surface of each of the supporting panels 9a, 9b, 9c. First ends of the pre-stressing cables are connected with an outer surface of one of the tower segments or can be connected with a first transition segment (not shown). Opposite ends of the pre-stressing cables are connected to second foundations (not shown). The pre-stressing cables can also absorb a tensile force imposed by the wind. Further, the pre-stressing cables need not be galvanised.

### List of reference signs

- 1: tower assembly
- 2: concrete tubular first tower segment
- 4: concrete tubular second tower segment
- 5: second channel
- 6: first pre-stressing cable
- 7: first transition segment
- 8: first bearing plate
- 9: supporting means, hollow concrete tower link
- 10: hollow link segment of hollow concrete tower link
- 11: second pre-stressing cable
- 12: hollow link segment
- 13: concrete support
- 14: second bearing plate
- 15: projection of first transition segment
- 16: clamping device
- 17: spring element
- 18: tubular steel third tower segment
- 19: third pre-stressing cable
- 20: concrete tubular fourth tower segment
- 21: fourth channel of concrete tubular fourth tower segment
- 22: concrete tubular fifth tower segment
- 23: fifth channel of fifth tower segment
- 24: fourth pre-stressing cable
- 25: another concrete tubular tower segment
- 26: main body of spring element
- 27: main foundation
- 28: second foundation
- 29: channel in wall of hollow link segment
- 30: helical spring of spring element
- a1: first axis of symmetry
- a2: second axis of symmetry

## Claims

1. Tower assembly (1) for a wind turbine installation, the tower assembly comprising
a concrete tubular first tower segment (2) ("first tower segment"), having a first channel aligned with a longitudinal axis of the first tower segment and arranged for accepting a pre-stressing cable, and
a concrete tubular second tower segment (4) ("second tower segment"), having a second channel (5) aligned with a longitudinal axis of the second tower segment and arranged for accepting a pre-stressing cable, wherein the first tower segment is arranged on top of the second tower segment, such that the first channel and the second channel are aligned,
supporting means (9), a first end of which is mechanically connected with the second tower segment, the supporting means being arranged for receiving or absorbing a load imposed on the tower assembly.

2. Tower assembly according to claim 1, comprising a first pre-stressing cable (6) which is arranged in the first channel and/or in the second channel for biasing the first tower segment towards the second tower segment.

3. Tower assembly according to any preceding claim, wherein the first channel is arranged in a segment wall of the first tower segment and/or the second channel is arranged in a segment wall of the second tower segment.

4. Tower assembly according to any of the preceding claims, wherein the first and second tower segments have the same outer diameter.

5. Tower assembly according to any preceding claim, wherein an outer wall of the first and/or the second tower segment comprises a first axis of symmetry and a shorter second axis of symmetry at a first cross section, wherein the outer wall has a curved circumference at the first cross section.

6. Tower assembly according to any preceding claim, having a circular second cross section at the top end of the tower assembly or at the top axial end of the first tower segment.

7. Tower assembly according to any preceding claim, wherein an inner wall of the first and/or second tower segment is oval or elliptic at a first cross section.

8. Tower assembly according to any preceding claim, wherein the average wall thickness of the first tower segment is smaller than the average wall thickness of the second tower segment.

9. Tower assembly according to any preceding claim, comprising a first transition segment (7) for connecting with one of tower segments of the tower assembly, preferably with the second tower segment, preferably comprising a flange for accommodating an axial end of the tower segment.

10. Tower assembly according to claim 9, wherein the first transition segment is arranged below the second tower segment, wherein the first tower segment is biased towards the second tower segment.

11. Tower assembly according to claim 9 or 10, wherein the first pre-stressing cable, preferably an end of the first pre-stressing cable, is held or supported by the first transition segment.

12. Tower assembly according to any preceding claim, comprising a metal first bearing plate (8) for supporting the first pre-stressing cable, particularly in an opening of the first bearing plate, wherein the first bearing plate is supported by the first tower segment, the second tower segment or by the first transition segment.

13. Tower assembly according to any preceding claim, wherein the first end of the supporting means (9) is mechanically connected with the first transition segment for receiving a load imposed on the tower assembly.

14. Tower assembly according to any preceding claim, wherein the supporting means comprise a hollow concrete tower link (10) and a second pre-stressing cable (11), preferably arranged inside the hollow concrete tower link or in a channel (29) in a tower link wall of the hollow concrete tower link.

15. Tower assembly according to any preceding claim, wherein the hollow concrete tower link has two hollow link segments (12) biased towards each other, preferably by one of the second pre-stressing cables.

16. Tower assembly according to any preceding claim, wherein the supporting means comprise a concrete support (13) extending essentially vertically for supporting the hollow concrete tower link.

17. Tower assembly according to any preceding claim, wherein the supporting means comprise a metal second bearing plate (14) for supporting one of the second pre-stressing cables, particularly in an opening of the second bearing plate, wherein the second bearing plate is supported by the first transition segment or by the hollow concrete tower link.

18. Tower assembly according to claim 17, wherein the first transition segment comprises a projection (15) supporting the second bearing plate, preferably a surface of the second bearing plate is perpendicular to a tensile force imposed by the supporting means on the transition segment.

19. Tower assembly according to claim 13, wherein the supporting means are panel shaped (supporting panel).

20. Tower assembly according to any preceding claim, wherein the outer diameter of the first tower segment or of a concrete top tower segment (25) arranged on top of the first tower segment increases towards its top when the segment is mounted in the tower assembly.

21. Tower assembly according to any preceding claim, further comprising a concrete tubular fourth tower segment (20) and a concrete tubular fifth tower segment (22), wherein the fourth tower segment is arranged above or on top of the fifth tower segment, wherein the second tower segment is arranged above or on top of the fourth tower segment.

22. Tower assembly according to claim 21, wherein a fourth channel of the fourth tower segment is aligned with a fifth channel of the fifth tower segment, wherein the first pre-stressing cable or can be a separate fourth pre-stressing cable runs through the channels of the fourth and fifth tower segment and biases the fourth tower segment towards the fifth tower segment.

23. Tower assembly according to any preceding claim, further comprising another concrete tubular tower segment (25), which is similar to the first tower segment and which is inserted between the first and second tower segment or between the fourth and fifth tower segment.

24. Tower assembly according to any preceding claim, comprising a tubular steel third tower segment (18) arranged on top of the first tower segment, wherein an end of one of the first pre-stressing cables is held by the third tower segment for biasing the third tower segment towards the first tower segment, preferably the first pre-stressing cable is arranged in a third channel of the third tower segment.

25. Tower assembly according to any preceding claim, wherein a third pre-stressing cable (19) runs from the first tower segment towards the bottom of the tower assembly, preferably inside the hollow of the first tower segment.

26. Wind turbine installation comprising a tower assembly according to one of the preceding claims and a wind turbine assembly mounted on said tower assembly, wherein the wind turbine assembly comprises a nacelle supporting a power generator and a rotor with blades, wherein a hub of the rotor is coupled to the power generator.

27. Method of manufacturing a tower assembly, preferably according to one of the preceding claims, comprising the following steps:
S1 providing a concrete tubular second tower segment, having a second channel aligned with a longitudinal axis of the second tower segment for a pre-stressing cable,
S2 positioning a concrete tubular first tower segment, having a first channel aligned with a longitudinal axis of the first tower segment for a pre-stressing cable, on top of the concrete tubular second tower segment, such that the first channel and the second channel are aligned,
S7 mechanically connecting a first end of supporting means with the second tower segment, the supporting means being arranged for receiving or absorbing a load imposed on the tower assembly,
preferably further comprising the following steps
S3 running a first pre-stressing cable through the first channel and the second channel,
S4 tensioning the first pre-stressing cable such that the concrete tubular first tower segment is biased towards the concrete tubular second tower segment.
